# EUROPEAN PATENT SPECIFICATION

(11) **EP 0 639 913 B1**
(45) Date of publication and mention of the grant of the patent: **27.09.2000**
(21) Application number: 94110701.3
(22) Date of filing: 09.07.1994
(51) Int. Cl.: H04L 27/233, H04L 1/00, H04L 1/20, H03M 13/00

(54) **Method for resolving phase ambiguities in a DPSK radio link**
Verfahren zur Beseitigung der Phasenmehrdeutigkeit in einer DPSK-Funkverbindung
Procédé pour éliminer l'ambiguité de phase de signaux DPSK dans une liaison radio électrique

(30) Priority: 18.08.1993 GB 9317173
(43) Date of publication of application: 22.02.1995
(73) Proprietor: ROKE MANOR RESEARCH LIMITED, Romsey, Hampshire, SO51 0ZN (GB)
(72) Inventor: Hulbert, Anthony Peter, Southampton, SO1 5AN (GB)
(74) Representative: Mackett, Margaret Dawn

(56) References cited:
- EP-A- 0 380 876
- US-A- 3 806 647
- IEEE TRANSACTIONS ON INFORMATION THEORY, vol.IT-18, no.1, January 1972, NEW YORK US pages 170 - 182 D. CHASE: 'A Class of Algorithms for Decoding Block Codes With Channel Measurement Information.'
- IEEE TRANSACTIONS ON INFORMATION THEORY, vol.35, no.5, September 1989, NEW YORK US pages 963 - 975, XP100927 J. SNYDERS / Y. BE'ERY: 'Maximum Likelihood Soft Decoding of Binary Block Codes and Decoders for the Golay Codes.'

## Description

The present invention relates to a method for use in equipment providing a digital radio link between a fixed and a mobile radio unit.

Equipment for providing such a radio link is described in GB-A-2 276 064 (corresponding to GB Patent Application Number 9304901.3). This application describes the use of Wiener-like filters for providing good estimates of the amplitude of the inphase I, the quadrature phase Q, components of, for example, the spread spectrum pilot signal.

In general, modulation schemes requiring fully coherent demodulation must include some form of known transmission or a pilot transmission. This is because of the phase ambiguity which is inevitable in any form of demodulation which relies on the data transmission alone for demodulation. In such schemes the pilot content of the transmitted signal includes a certain amount of additional energy.

It would be advantageous if a scheme was available which reduced the additional energy to a minimum.

A scheme of this kind is known from US-A-3 806 647.

An object of the present invention is to provide a method providing a digital radio link between a fixed and a mobile radio unit in which the additional energy included in the pilot content of a transmitted signal is reduced to a minimum.

According to the present invention, there is provided a method of minimising additional energy in a pilot of a transmitted signal in apparatus for use in equipment providing a digital radio link between a fixed and a mobile radio unit, the method comprising the steps of: a) receiving an error correction coded signal frame; b) demodulating data in the error correction coded signal frame; c) decoding the demodulated data; d) checking the decoded data for errors; e) if errors are present, inverting the demodulated data and repeating steps c) and d); characterised by f) if errors are still present, determining a profile of signal energy over the frame; g) identifying points of low signal energy over the frame; h) inverting the demodulated data at points corresponding to positions of minimum signal energy; and i) repeating steps c) to e) for each inversion.

Embodiments of the present invention will now be described with reference to the accompanying drawings, wherein;
FIGURE 1 shows a block diagram of a differential binary phase shift keying receiver using decision directed Wiener filter demodulation;
FIGURE 2 shows a receiver, having a double-pass decision direct demodulator; and
FIGURE 3 shows a block diagram of the circuitry which may be used to carry out the invention in association with Figure 1 or Figure 2.

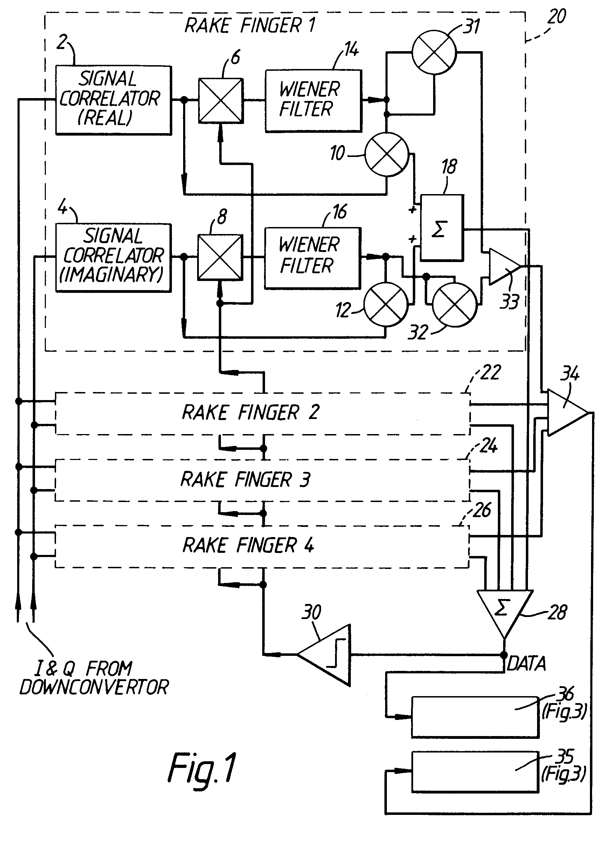

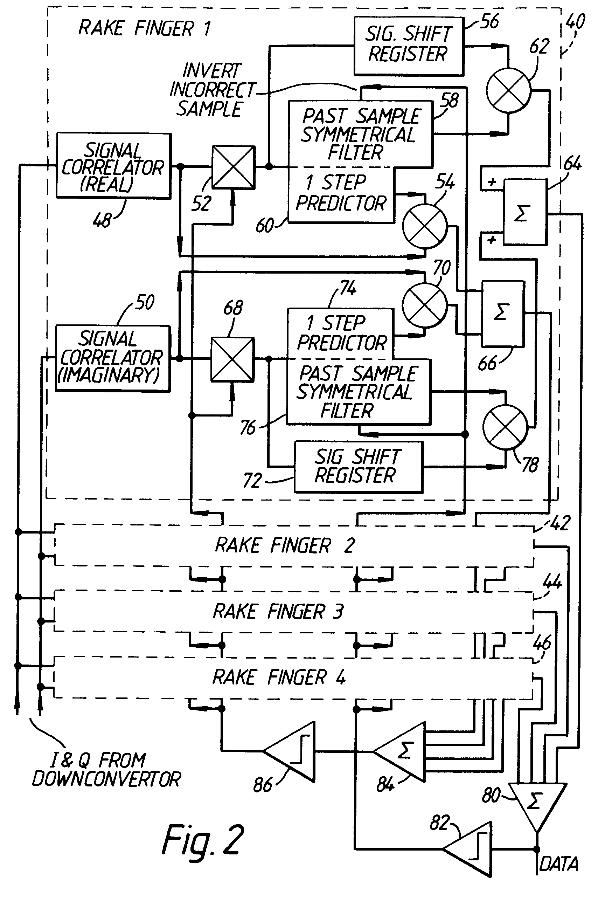

The present invention relies on the redundant information included in error control coding to resolve any phase ambiguities. A binary phase shift keying signal is transmitted which may be a differential binary phase shift keying signal and the signal may be demodulated using either of the demodulators shown in Figures 1 and 2.

With reference to Figure 1, the decision directed Wiener filter demodulator includes a first signal correlator 2 which handles the inphase I components of the signal and a second signal correlator 4 which handles the quadrature phase Q components of the input signal. The input signals are received from a down converter. An output from each signal correlator 2, 4 is connected to an input of a half linear multiplier 6, 8 respectively, and to a first input of a linear multiplier 10, 12 respectively. An output from each half linear multiplier 6, 8 is connected to an input of a Wiener-like filter 14, 16 respectively. An output from each Wiener-like filter 14, 16 is connected to a second input of the linear multipliers 10, 12 respectively. An output from each of the linear multipliers 10, 12 is connected to an input of an adder device 18. The circuitry described so far represents the content of a single Rake finger 20 and it will be appreciated that the other Rake fingers 22, 24, 26 include identical circuitry.

The linear multipliers 31, 32 adder circuits, 33, 34 and shift registers 35, 36 will be described in detail later.

The adder circuit 18 has an output connected to a further adder circuit 28 which receives the similar outputs from the other Rake fingers. The adder circuit 28 has an output connected to an input of a hard limiting device 30, the output of which is fed back to a further input of each half linear multiplier 6, 8. The data output is provided from the output of the adder circuit 28.

Referring now to Figure 2, a plurality of Rake fingers 40, 42, 44, 46, are shown each having the following circuit elements. Each Rake finger includes a first signal correlator 48 which handles the inphase I components of the input signal, and a further signal correlator 50 which handles the quadrature components Q of the input signal. The input signal is received from a down converter. The correlator 48 is connected to an input of a half linear multiplier 52 and to a first input of a linear multiplier 54. An output from the half linear multiplier 52 is connected to a signal shift register 56 and to a past sample symmetrical filter 58 and to a one step predictor 60. An output from the signal shift register 56 and the past sample symmetrical filter 58 is connected to an input of a further linear multiplier 62 respectively. An output from the one step predictor 60 is connected to a second input of the linear multiplier 54. An output from the linear multiplier 62 is connected to a first adder circuit 64, and an output from the linear multiplier 54 is connected to an input of a second adder circuit 66.

An output from the signal correlator 50 is connected to an input of a further half linear multiplier 68 and to a first input of a linear multiplier 70. An output from the half linear multiplier 68 is connected to an input of a signal shift register 72, an input of a one step predictor 74, and to an input of a further past sample symmetrical filter 76. An output from the signal shift register 72 and an output from the past sample symmetrical filter 76 is connected to an input of a linear multiplier 78 respectively. An output from the one step predictor 74 is connected to a second input of the linear multiplier 70. An output from the liner multiplier 70 is connected to a second input of the adder circuit 66, and the output from the liner multiplier 78 is connected to a second input of the adder circuit 64. An output from the adder circuit 64 is connected to a further adder circuit 80 which receives the corresponding outputs from the other Rake fingers and generates at an output thereof a data signal. The output from the adder circuit 80 is also connected to a hard limiting device 82 which has its output fed back to an input of the past sample symmetrical filters in each Rake finger. The output from the adder circuit 66 is connected to an input of a further adder circuit 84 which receives the corresponding outputs from the other Rake fingers. The output from the adder circuit 84 is connected to a further limiting circuit 86 and an output thereof is connected to a further input of each of the half liner multipliers 52, 68 in each Rake finger.

The circuit diagrams described above may be used to perform the present invention and their operation is described in GB-A-2 276 064 (corresponding to GB Patent Application Number 9304901.3) in respect of Figure 1, and GB-A-2 278 029 (corresponding to GB Patent Application Number 9309748.3) in respect of Figure 2.

The demodulated data may all be inverted or part of it may be inverted. In general, the sense of the cater reference is arbitrary so assuming that there is no inversion contained within a signal burst, there is a 50% probability of demodulating the data inverted. If, during a transmission frame, there is a deep fade involving all of the Rake fingers then the decision directed pilot may become lost during this fade. When the reference is newly obtained as the signal emerges from fade it will have a 50% probability of having the opposite sense to that before the fade. However, it is highly improbable that a reference inversion will occur other than at or near the time of such a fade. Thus if the deepest fades can be identified then the places of possible data inversion are also defined.

To achieve this, the signal fading can be found from the channel estimates either from the one step predictor or from the past sample symmetrical filter as discussed above. A profile of the signal energy over a transmit frame can be obtained by squaring and adding together the outputs from the one step predictors or from the past sample symmetrical filters.

The most likely choice of inversion or non-inversion of either the whole or parts of a flame can be determined from either forward error correction coding (FEC) and error detection checksum (EDC) or ideally a combination of the two. This is achieved as follows.

When only forward error correction coding is used, then for each of the possible set of inversions the data is decoded and the overall reliability metric for the correct detection of the frame is computed. This will generally either be, or closely related to, the a posteriori probability for that decoded data sequence. For example, in the case of convolutional encoding, it would simply be the path metric corresponding to the final selected path. For every choice of inversion the metrics are compared and a selection is made of those comparisons which yield the highest metric. Codes for which the compliments of codewords are also codewords may not be used, for example cyclic codes.

When using error detection checksum, the data is demodulated and the checksum is applied. If it is correct then the data is accepted. If not, then the data is inverted and the checksum applied again. If correct the process ceases, otherwise the data on one side of the point of minimum total estimated signal over the fade is inverted and the process if repeated. If this fails the whole burst is inverted and so on, working through the places of minimum signal until the checksum succeeds. Again, codes with compliments of codewords as codewords may not be used. This restriction may be removed if one bit of known data is added to the source data prior to encoding. If that bit is inverted then clearly the data is incorrect. This approach may be liable to random errors, and therefore is best used in combination with the forward error correction coding.

When combining forward error correction coding with error detection checksum both the forward error correction coding and the error detection checksum are applied. If correct the process stops, otherwise a procedure is continued as described for the above case of error detection coding until successful decoding is obtained.

When selecting the points of possible inversion it is necessary to separate the fades. It is undesirable to identify a large number of closely spaced points all essentially at or near the bottom of the same fade. This is achieved by using the fact that the separation of fades would be related to the correlation time of the channel for the prevailing fading conditions, ie vehicle speed etc. An estimate of the correlation time is therefore needed. An approximate value of this may be obtained by examining which of the estimation filter types are in use.

The fades are identified by the following algorithm.
1) Identify the point with the smallest signal level over the available frame.
2) If this is more than n (where n is a small number) bits from either edge of the frame add this to a list of fades.
3) Remove (or set to arbitrary high signal level) all of the points surrounding the last smallest signal level point (whether used or not in step 2) to distance of ±x times the correlation time (or out to the edge of the frame if this is less far in one direction).
4) Repeat from step 1 until all necessary points have been identified.
5) When all points have been identified reverse the order of the list to obtain a list in descending order of significance. The deepest fade will therefore be the most likely position for a reference inversion.

Step 2 described above is applied because fading on either side or both edges of the frame is covered by the initial inversion. The value of n would be zero if the channel estimate were noise free but in practice it is set to a small number to allow for the possibility that the lowest signal level is at the edge of the frame but that noise has disguised the fact. Moreover, if the deepest fade is only a few bits from the edge of the frame, then only these few bits will be affected and these could be corrected by the forward error correction procedure.

The factor x in step 3 must be set empirically to a value optimal for the range of possible correlation times applied by the choice of Wiener filter.

Referring back to Figure 1, which represents a conventional decision directed channel estimating demodulator for DPSK, the demodulator is modified by the linear multipliers 31, 32 and the adder circuit 33 which for each Rake finger together comprise a signal energy estimator and the shift registers 35, 36. The estimates are combined across the Rake fingers in the adder circuit 34 to produce an overall estimate of the receive energy at any given point. This received estimate is accumulated in a shift register 35. The shift register 35 at the end of a transmit frame will contain a profile of the signal energy over the duration of the transmission of that frame.

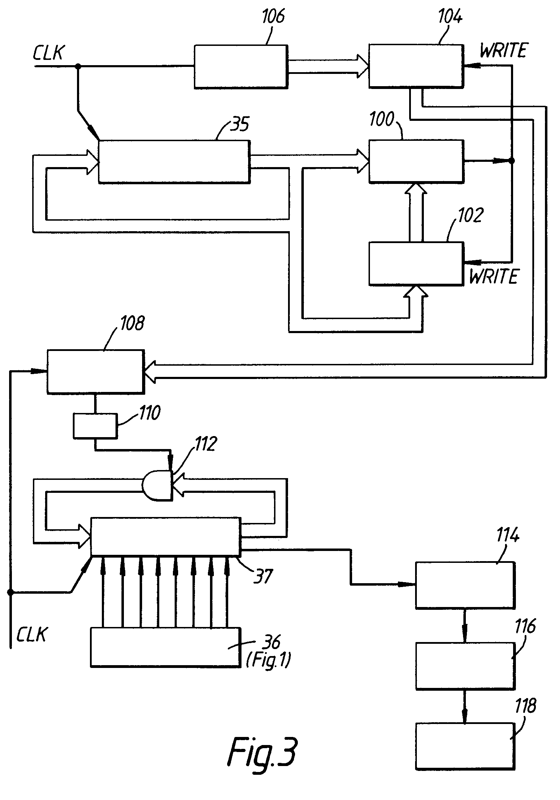

Referring to Figure 3, the circuitry which carries out the present invention comprises the shift register 35 which is connected to receive the output from the adder circuit 34 of Figure 1. The shift register has its output looped round to an input, and the output is also connected to an input of a comparator 100 and to a register 102. A counter 106 has an output connected to an input of a register 104, and the output from the register 104 is connected to an input of a further counter 108. The output from the register 102 is connected to a further input of the comparator 100 and the output of the comparator 100 which represents a write signal is applied to a write input of the registers 102 and 104. An output from the counter 108 is applied to an output of a zero latch circuit which is connected to control a switchable inverter 112. The inverter 112 is connected in a loop around path of the shift register 37. The shift register 37 is connected to be loaded from the shift register 36 shown in Figure 1. An output from the shift register 37 is connected to an input of a de-interleaving circuit 114, an output of which is connected to a viterbi decoder 116. An output from the decoder 116 is connected to an input of a checksum circuit 118.

The counter 106, counter 108 and shift registers 35, 37 are connected to receive a clock input signal which is initialised from, for example, the circuitry of Figure 1.

The purpose of the invention is to search the profile for minima. Figure 3 depicts one implementation of a preferred embodiment of the invention, and shows digital hardware means whereby the minimum energy place within a signal can be determined. The circuit operates as follows.

The shift register 35 is initialised by the demodulator and contains the stored profile of the signal energy. The shift register 35 is connected in a looped round feedback circuit and is clocked so that successive contents of the shift register are cycled around. As the shift register 35 is clocked its output is fed to a comparator circuit 100, and the other input of the comparator is connected to a register 102 which is initialised to contain an arbitrarily high value. As the contents of shift register 35 are cycled round the comparator 100 output will vary depending upon whether its input from the shift register 35 is greater or less than its input from register 102. Whenever the input from shift register 35 is less, the output of the comparator circuit 100 will go high and will drive the write input of register 102 high to enable the contents of that register to be overwritten with the output of shift register 35. In this way as the contents of shift register 35 are cycled, the register 102 will always contain the smallest value encountered so far. In parallel with this operation a counter 106 is clocked to count the number of rotations of shift register 35. Whenever the output of comparator circuit 100 goes high the contents of this counter are written into another register 104. When all cycles of the shift register 35 have been completed, the register 104 will contain the shift of the shift register 35 which corresponds to the position of the smallest entry.

The contents of the register 104 are used to shift a copy of the phase compensated demodulated data in the manner described as follows. In a similar way to shift register 35, a shift register 37 contains a copy of the contents of shift register 36 which is connected to the data output line of Figure 1. The shift register 37 is clocked cyclically and includes a feedback path which contains a switchable inverter 112. A counter circuit 108 which counts down is initialised with the contents of register 104, and thus as it counts down it counts down to zero at the shift corresponding to the position of the minimum energy. At this point it generates an output through a latched zero circuit 110 which controls the switchable inverter 112 in such a way that following this shift all other data is copied back into the shift register 37 inverted, thus following the complete rotations of the shift register, part of the data will be inverted with respect to the remainder. Following this operation the output of shift register 37 is clocked out to a de-interleaving circuit 114. The output of the de-interleaving circuit 114 is applied to a viterbi decoder 116 and a checksum is performed by circuit 110. If the checksum gives correct data then no further operations are required otherwise the contents of shift register 37 are inverted and applied to the deinterleaver and the process repeated.

It will be appreciated by those skilled in the art that the embodiment described with reference to Figure 3 in association with the demodulator shown in Figure 1, may also be used in association with the demodulator shown in Figure 2.

## Claims

1. A method of minimising additional energy in a pilot of a transmitted signal in apparatus for use in equipment providing a digital radio link between a fixed and a mobile radio unit, the method comprising the steps of:
a) receiving an error correction coded signal frame;
b) demodulating data in the error correction coded signal frame;
c) decoding the demodulated data;
d) checking the decoded data for errors;
e) if errors are present, inverting the demodulated data and repeating steps c) and d);
characterised by:
f) if errors are still present, determining a profile of signal energy over the frame;
g) identifying points of low signal energy over the frame;
h) inverting the demodulated data at points corresponding to positions of minimum signal energy; and
i) repeating steps c) to e) for each inversion.

2. A method according to claim 1, wherein step g) comprises ranking the points of low signal energy to form a list in which the point with the lowest signal energy is listed prior to points with higher signal energy, the points with higher signal energy being listed in ascending order.

3. A method according to claim 2, wherein step g) further comprises determining if the locations of points with the lowest signal energy from either edge of the frame are more than n bits from either edge of the frame.

4. A method according to claim 2 or 3, wherein step h) comprises inverting the demodulated data at the points in the list starting with the point corresponding to the lowest signal energy.

5. A method according to any one of the preceding claims, wherein step d) comprises using a cyclic redundancy check code applied to the decoded data to apply a checksum to detect errors.

## Patentansprüche

1. Verfahren zum Minimieren zusätzlicher Energie in einem Schlüsselzeichen eines übertragenen Signals in einer Vorrichtung, die in einem Gerät verwendet wird, das eine digitale Funkverbindung zwischen einer festen und einer mobilen Funkeinheit herstellt, wobei das Verfahren die folgenden Schritte umfaßt:
a) Empfangen eines fehlerkorrekturcodierten Signalrahmens;
b) Demodulieren von Daten im fehlerkorrekturcodierten Signalrahmen;
c) Decodieren der demodulierten Daten;
d) Prüfen der decodierten Daten auf Fehler;
e) falls Fehler vorhanden sind, Invertieren der demodulierten Daten und Wiederholen der Schritte c) und d);
gekennzeichnet durch
f) Bestimmen eines Profils der Signalenergie über den Rahmen, falls Fehler noch immer vorhanden sind;
g) Identifizieren von Punkten niedriger Signalenergie über den Rahmen;
h) Invertieren der demodulierten Daten an Punkten, die Positionen minimaler Signalenergie entsprechen; und
i) Wiederholen der Schritte c) bis e) für jede Inversion.

2. Verfahren nach Anspruch 1, bei dem der Schritt g) das Ordnen der Punkte niedriger Signalenergie in einer Reihenfolge umfaßt, um eine Liste zu bilden, in der der Punkt mit der niedrigsten Signalenergie vor Punkten mit höherer Signalenergie aufgelistet ist, wobei die Punkte mit höherer Signalenergie in aufsteigender Ordnung aufgelistet sind.

3. Verfahren nach Anspruch 2, bei dem der Schritt g) ferner umfaßt: Feststellen, ob die Orte der Punkte mit der niedrigsten Signalenergie von irgendeiner Flanke des Rahmens um mehr als n Bits von irgendeiner Flanke des Rahmens entfernt sind.

4. Verfahren nach Anspruch 2 oder 3, bei dem der Schritt h) umfaßt: Invertieren der demodulierten Daten an den Punkten in der Liste, wobei bei dem Punkt begonnen wird, der niedrigsten Signalenergie entspricht.

5. Verfahren nach einem der vorhergehenden Ansprüche, bei dem der Schritt d) umfaßt: Verwenden eines Codes für zyklische Redundanzprüfung, der auf die decodierten Daten angewendet wird, um eine Prüfsumme anzuwenden, um Fehler zu erfassen.

## Revendications

1. Procédé pour minimiser l'énergie supplémentaire dans une onde pilote d'un signal transmis dans un dispositif destiné à être utilisé dans un équipement établissant une liaison radio numérique entre une unité radio fixe et une unité radio mobile, le procédé comportant les étapes consistant à :
a) recevoir une trame de signal codée en termes de correction d'erreurs,
b) démoduler des données dans la trame de signal codées en termes de correction d'erreurs,
c) décoder des données démodulées,
d) contrôler les données codées en termes d'erreurs,
e) si des erreurs sont présentes, inverser les données démodulées et répéter les étapes c) et d),
caractérisé en ce que
f) si des erreurs sont toujours présentes, déterminer un profil d'énergie de signal sur la trame,
g) identifier des points d'énergie de signal faible sur la trame,
h) inverser les données démodulées au niveau de points correspondant à des positions d'énergie de signal minimale, et
i) répéter les étapes c) à e) pour chaque inversion.

2. Procédé selon la revendication 1, dans lequel l'étape g) comporte le classement des points d'énergie de signal faible pour former une liste dans laquelle le point ayant l'énergie de signal la plus faible est positionné dans la liste avant des points ayant une énergie de signal plus élevée, les points ayant une énergie de signal plus élevée étant positionnés dans la liste dans un ordre croissant.

3. Procédé selon la revendication 2, dans lequel l'étape g) comporte de plus l'étape consistant à déterminer si les emplacements de points ayant l'énergie de signal la plus faible par rapport à l'un des bords de la trame sont distants de plus de n bits par rapport à l'un des bords de la trame.

4. Procédé selon la revendication 2 ou 3, dans lequel l'étape h) comporte l'étape consistant à inverser les données démodulées au niveau des points dans la liste en commençant par le point correspond à l'énergie de signal la plus faible.

5. Procédé selon l'une quelconque des revendications précédentes, dans lequel l'étape d) comporte l'étape consistant à utiliser un code de contrôle de redondance cyclique appliqué aux données décodées pour appliquer une somme de contrôle afin de détecter des erreurs.
